# EUROPÄISCHE PATENTSCHRIFT

(11) **EP 1 919 659 B1**
(45) Veröffentlichungstag und Bekanntmachung des Hinweises auf die Patenterteilung: **15.10.2008**
(21) Anmeldenummer: 06775893.8
(22) Anmeldetag: 24.08.2006
(51) Int. Cl.: B23Q 17/20, B23Q 17/24, G01B 11/00

(54) **MESSSTATION FÜR EINE ROHRSCHNEIDEMASCHINE**
MEASURING STATION FOR A PIPE CUTTING MACHINE
STATION DE MESURE DESTINEE A UNE MACHINE COUPE-TUBES

(30) Priorität: 09.09.2005 DE 102005043223
(43) Veröffentlichungstag der Anmeldung: 14.05.2008
(73) Patentinhaber: Rattunde & Co GmbH, 19288 Ludwigslust (DE)
(72) Erfinder: RATTUNDE, Ulrich, 19322 Bentwisch (DE)
(74) Vertreter: Groth, Wieland
(86) Internationale Anmeldenummer: PCT/DE2006/001474
(87) Internationale Veröffentlichungsnummer: WO 2007/028352

(56) Entgegenhaltungen:
- DE-A1- 3 834 052
- DE-A1- 4 444 787

## Beschreibung

Die Erfindung betrifft eine Messstation, insbesondere für eine Schneidemaschine für stangenförmiges Profilmaterial und ein Verfahren zur Bestimmung des Profils eines Objektes, insbesondere eines stangenförmigen Profilmaterialendes. Die Erfindung betrifft auch eine Maschine zum Ablängen von stangenförmigem Profilmaterial mit wenigstens einer Messstation.

DE-44 44 787-A offenbart eine Merstation nach dem Oberbegriff von Anspruch 1.

Rohrschneidemaschinen längen Abschnitte von Rohren ab. Bei modernen Rohrschneidemaschinen findet eine integrierte Nachbehandlung des abgelängten Rohrabschnitts in Form von Entgraten und/oder Anfasen der Rohrenden statt. Insbesondere zur Kontrolle der Fasenwinkel, der Wandungsstärke und des Innen- und Außendurchmessers des Rohrendes, des Planlaufs und des Stimschlags ist es bei einer Hochpräzisionsbearbeitung von Rohren notwendig, die Rohrenden einzeln nach dem Bearbeitungsvorgang zu prüfen. Externe Messstationen zur Prüfung der genannten Parameter sind im Stand der Technik grundsätzlich bekannt. Dabei wird der abgelängte Rohrabschnitt aus der Rohrschneidemaschine heraus genommen und in die externe Messstation eingebracht. In bekannter Weise werden zur Vermessung des Profils der Rohrenden mechanische Sensoren in Form von Rollköpfen verwendet. Diese Form der Messung ist präzise aber auch sehr zeitaufwendig.

Es ist Aufgabe der Erfindung, eine kostengünstige und schnelle Messstation, insbesondere für eine Schneidemaschine zum Ablängen von stangenförmigem Profilmaterial und ein Verfahren zur Bestimmung des Profils von insbesondere stangenförmigen Profilmaterialenden zur Verfügung zu stellen.

Die Aufgabe wird bei einer gattungsgemäßen Messstation gelöst mit einem mittels eines Antriebs um eine Querachse schwenkbaren ersten Entfernungssensor zur Erzeugung eines ersten Abtaststrahls, der während der kontinuierlichen Schwenkbewegung ein Objekt abtastet und getaktet erste Entfernungsmesswerte misst und einem bezüglich der Querachse ortsfesten zweiten Entfernungssensor zur Erzeugung eines zweiten Abtaststrahls, der auf eine drehfest mit dem ersten Entfernungssensor verbundene Winkelmesseinrichtung gerichtet ist und getaktet zweite Entfernungsmesswerte misst und einer Anschlüsse für die ersten und zweiten Entfernungsmesssignale aufweisenden elektronischen Synchronisationseinheit und einer ein Profil des zu vermessenden Objekts aus den synchronisierten Entfernungsmesssignalen berechnenden Recheneinheit.

Es hat sich überraschend gezeigt, dass das Profil von Objekten, insbesondere von stangenförmigen Profilmaterialenden, mit nur zwei Entfernungssensoren präzise bestimmt werden kann. Unter Profil ist hier die räumliche Ausgestaltung eines Endes eines stangenförmigen Profilmaterials, insbesondere eines Rohrendes zu verstehen. Bei Rohren ist das Profil des Rohrendes durch Parameter wie dem Fasenwinkel, der Wandungsstärke und des Innen- und Außendurchmessers, des Planlaufs und des Stirnschlags bestimmt.

Der Begriff des stangenförmigen Profilmaterials ist hingegen als Oberbegriff, insbesondere für stangenförmige Vollmaterialien, Rohre und stangenförmige Profile zu verstehen und von dem des Profils als räumlicher Ausgestaltung des Endes eines stangenförmigen Profilmaterials zu unterscheiden.

Vorzugsweise werden als Entfernungssensoren Lasersensoren verwendet. Herkömmliche Lasersensoren ermöglichen die Messung von 50.000 Entfernungswerten pro Sekunde. Sie sind damit sehr genau und schnell.

Erfindungsgemäß ist der erste Entfernungssensor um eine Querachse, vorzugsweise kontinuierlich schwenkbar. Durch die kontinuierliche Schwenkbewegung ist eine besonders schnelle Messung möglich. Die Querachse ist günstigenfalls quer zur Längsrichtung des stangenförmigen Profilmaterials angeordnet.

Dabei ist der erste Abtaststrahl des ersten Entfernungssensors in Richtung des zu vermessenden Objektes gerichtet. Der erste Abtaststrahl überstreicht einen Längsschnitt des Objektes in einer Schwenkbewegung. Der erste Entfernungssensor misst erste Entfernungsmesswerte von Objektpunkten zum ersten Entfemungssensor. Der als erster Lasersensor ausgebildete erste Entfernungssensor weist einen ersten Laser und eine erste CCD-Kamera auf. Der vom ersten Laser abgehende erste Laserstrahl trifft auf das zu vermessende Objekt und reflektiert diffus. Ein kleiner Teil des diffus reflektierten Laserstrahls trifft auf die auf den Auftreffpunkt des Laserstahls auf dem Objekt fokussierte erste CCD-Kamera. Die Entfernungsmesswerte der Objektpunkt zum Lasersensor werden in Entfernungsmesssignale umgewandelt.

Aus den ersten Entfernungsmesssignalen kann das abgetastete Profil des Längsschnitts des Objektes mit der Recheneinheit berechnet werden. Dazu ist es jedoch auch erforderlich, für günstigenfalls jeden ersten Entfernungsmesspunkt die genaue Winkelstellung des schwenkbaren, ersten Entfernungssensors um die Querachse zu ermitteln. Aus der Winkelstellung des ersten Entfernungssensors um die Querachse und den ersten Entfernungsmesswerten, kann dann bei einer hinreichenden Anzahl von Messsignalpaaren, das abgetastete Profil des Objektes, insbesondere das Ende des Rohrabschnitts, hinreichend genau berechnet werden.

Der erste Entfernungssensor ist günstigstenfalls in einer Halterung gelagert, die mit einem Servomotor drehfest verbunden ist. Der Servomotor oszilliert um eine Querachse, und er erzeugt eine oszillierende Schwenkbewegung des ersten Entfernungssensors. Herkömmliche Servomotoren gestatten zwar auch eine getaktete Abgabe von Winkel-Istwerten, so dass grundsätzlich die Winkelposition des ersten Entfernungssensors durch die Istwertabgabe des Servomotors bestimmbar ist. Herkömmliche Servomotoren weisen jedoch eine deutlich geringere Taktung als die oben beschriebenen Lasersensoren auf. Die Taktung der Lasersensoren liegt üblicherweise bei etwa 50 KHz. Allerdings stellt der handelsübliche Servomotor Istwerte zur Positionsbestimmung mit einer Frequenz von etwa 150 Hz zur Verfügung, d. h. es werden nur 150 Positionsbestimmungen pro Sekunde ermöglicht. Damit können auch nur 150 Winkelmesswerte bestimmt werden. Zum einen können dann aber nicht annähernd alle ersten Entfernungsmesswerte ausgewertet werden, zum anderen besteht das Synchronisationsproblem, jedem Winkelmesswert den passenden ersten Entfemungsmesswert zuzuordnen.

Hier setzt nun die Erfindung an. Sie macht von der Idee Gebrauch, die Winkelbestimmung des ersten Entfernungssensors um seine Querachse durch einen zweiten Entfernungssensor mit gleicher Taktung und Genauigkeit, vorzugsweise einen baugleichen Sensor, vorzunehmen. Erfindungsgemäß ist ein zweiter Abtaststrahl des zweiten Entfernungssensors auf eine Winkelmesseinrichtung gerichtet, die drehfest an der Halterung des ersten Entfernungssensors angeordnet ist. Die Winkelmesseinrichtung ist günstigenfalls als Winkelmessplatte ausgebildet, vorzugsweise mit einer dem zweiten Entfernungssensor zugewandten reflektierenden Beschichtung. Je nach Winkelstellung des ersten Entfernungssensors, weist die Winkelmessplatte einen anderen Abstand zum, gegenüber der Querachse ortfesten, zweiten Entfernungssensor auf. Aus dem Abstand der Winkelmessplatte zum zweiten Entfernungssensor ist die Winkelstellung des ersten Entfernungssensors berechenbar. Durch die Verwendung zweier gleichartiger Entfernungssensoren mit vorzugsweise gleicher Taktung, werden die Synchronisationsprobleme gelöst. Tatsächlich ist es möglich, den ersten Entfernungssensor in Form eines ersten Lasersensors, und den zweiten Entfernungssensor in Form eines zweiten, baugleichen Lasersensors an eine herkömmliche Synchronisationseinheit anzuschließen, die die beiden Entfernungsmesswerte synchronisiert und dann einer Recheneinheit zuführt. In der Recheneinheit ist aus den synchronisierten Entfernungsmesssignalpaaren ein Profil des stangenförmigen Profilmaterialendes bestimmbar.

In einer bevorzugten Ausführungsform der Erfindung, ist der abgelängte Profilmaterialabschnitt auf einer am Auswurf einer Schneidemaschine angeordneten Rotationsvorrichtung gelagert. Die zum Ablängen von stangenförmigem Profilmaterial bestimmte Schneidemaschine wirft die abgelängten Profilmaterialabschnitte in dem Auswurf aus. Dort kann eine Rotationsvorrichtung, z. B. in Form von gleichsinnig rotierenden, voneinander beabstandeten Rollen vorgesehen sein, zwischen denen der abgelängte Abschnitt aufgenommen wird und mit einer Frequenz, die im Wesentlichen der Frequenz der rotierten Rollen entspricht, rotiert wird. Die Frequenz beträgt vorzugsweise etwa 1 Hz. Bei der erfindungsgemäßen Messstation ist die Vermessung eines stangenförmigen Profilmaterialendes innerhalb einer Sekunde möglich. Das stangenförmige Profilmaterialende rotiert während der einen Sekunde einmal vollständig um seine Längsachse.

In dieser einen Sekunde führt der, mit einer Frequenz von etwa 6 Hz oszillierende Servomotor sechs Hin- und Herbewegungen des ersten Lasersensors aus, so dass der Laserstrahl das stangenförmige Profilmaterialende zwölf mal vollständig überstreicht und damit zwölf voneinander um einen gleichen Winkel beabstandete Längsschnitte vermisst. Insbesondere sind durch die erfindungsgemäße Messstation der innere und äußere Anfaswinkel, die Rohrwandungsstärke, der Innen- und Außendurchmesser des Rohres, sowie die Größe der Stirnfläche und der Stirnschlag des Rohres bestimmbar.

Das dreidimensionale Profil insbesondere eines Rohres entlang seines Gesamtumfanges ist durch Interpolation über die zwölf Längsschnittmessungen hinreichend genau berechenbar, da ein Rohrende im Wesentlichen rotationssymmetrisch um seine Längsachse ist.

Das durchschnittliche zweidimensionale Profil eines Längsschnitts des Rohrendes ist durch Mittelung über die vorzugsweise zwölf einzelnen Messungen der Längsschnitte möglich.

Die Aufgabe wird in ihrem zweiten Aspekt durch ein Verfahren zur Bestimmung des Profils eines Objekts gelöst, indem mittels eines Antriebs ein erster Entfernungssensor mit einem ersten Abtaststrahl um eine Querachse kontinuierlich geschwenkt wird und während der kontinuierlichen Schwenkbewegung das Objekt abgetastet wird und erste Entfernungsmesswerte getaktet gemessen werden und ein zweiter Abtaststrahl eines bezüglich der Querachse ortsfesten, zweiten Entfernungssensors auf eine drehfest mit dem ersten Entfernungssensor verbundene Winkelmesseinrichtung gerichtet wird und zweite Entfernungsmesswerte des ersten Entfernungssensors getaktet gemessen werden und erste und zweite Entfernungsmesssignale einer elektronischen Synchronisationseinheit zugeführt werden und dort synchronisiert werden und ein Profil des Objekts aus den synchronisierten Entfernungsmesssignalen mittels einer Recheneinheit berechnet wird.

Das Verfahren ist zur Durchführung mittels einer der vorgenannten Messstationen geeignet.

Die Erfindung betrifft auch eine Maschine zum Ablängen von stangenförmigem Profilmaterial mit einem Auswurf für abgelängte stangenförmige Profilmaterialabschnitte und mit einer Rotationsvorrichtung für die abgelängten stangenförmigen Profilmaterialabschnitte und mit einer vorbeschriebenen Messstation, die neben der Rotationsvorrichtung angeordnet ist, wobei der erste Abtaststrahl auf ein stangenförmiges Profilmaterialende eines in der Rotationsvorrichtung aufnehmbaren stangenförmigen Profilmaterialabschnitts richtbar ist.

Es hat sich gezeigt, dass sich die vorbeschriebene Messstation insbesondere zur Vermessung des Profils von Rohrenden eignet. Rohrenden sind aufgrund ihrer rotationssymetrischen Ausbildung durch wenige genaue Längsschnittmessungen auch entlang ihres Umfanges vollständig bestimmbar. Die jeweiligen Längsschnittmessungen können mit einer der oben beschriebenen Messstationen und/oder Verfahren genau durchgeführt werden.

Der erste Entfernungssensor ist zwischen zwei extremalen Positionen schwenkbar. In seinen extremalen Positionen sendet er extremale Abtaststrahlen aus. Ein extremaler erster Abtaststrahl ist dabei auf eine Außenfläche des Rohrendes des in der Rotationsvorrichtung aufgenommenen Rohrabschnitts gerichtet. Während der Schwenkbewegung wird auch ein Abschnitt der Innenwandung des Rohrendes überstrichen. Durch eine derartige relative Anordnung von erstem Laserstrahl und Rohrende können die genannten Parameter bestimmt werden.

Vorzugsweise ist bei einer Maschine zum Ablängen von stangenförmigem Profilmaterial an gegenüberliegenden Seiten des Auswurfs eine Messstation vorgesehen. Somit können beide Enden des stangenförmigen Profilmaterialabschnitts auch gleichzeitig vermessen werden.

Vorzugsweise sind die erfindungsgemäße Messstation und das erfindungsgemäße Verfahren zur Vermessung von metallischen, stangenförmigen Profilmaterialien, insbesondere von Metallrohren bestimmt. Die erfindungsgemäße Schneidemaschine ist vorzugsweise auch zum Schneiden von metallischen, stangenförmigen Profilmaterialien, insbesondere von Metallrohren bestimmt.

Die Erfindung wird anhand eines Ausführungsbeispieles in zwei Figuren beschrieben. Dabei zeigen:
- Fig. 1: Schnittansicht der erfindungsgemäßen Messstation und eines zu vermessenden eingespannten Rohrs,
- Fig. 2: Rohrende mit messbaren Parametern.

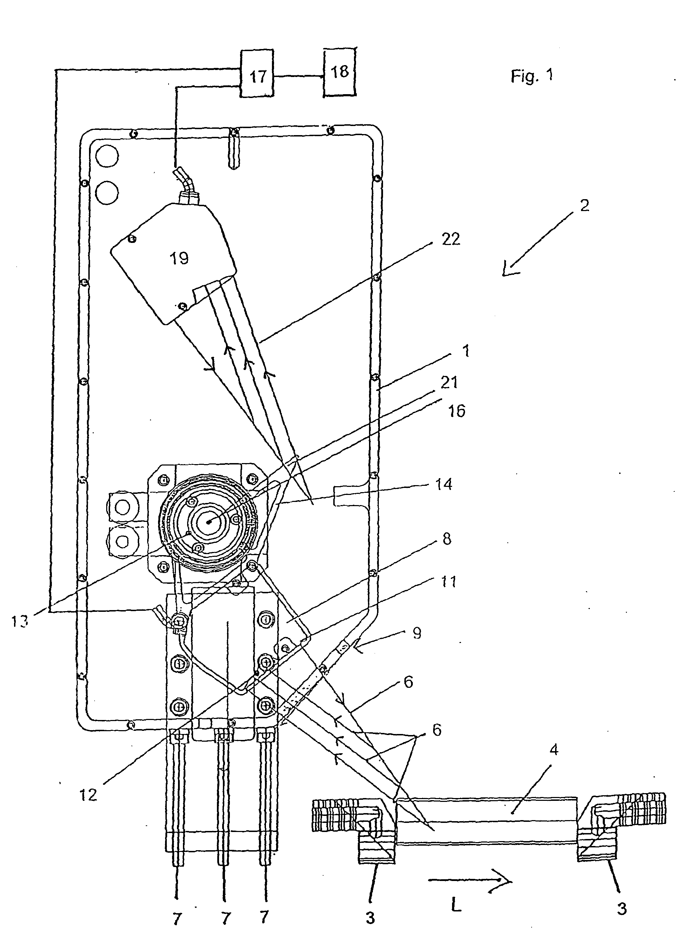

Die in Fig. 1 dargestellte Anordnung zeigt zum einen die in einem im Querschnitt rechteckigen, mit einer abgeschrägten Ecke ausgebildeten Gehäuse 1 angeordnete Messstation 2. Zum anderen ist neben der Messstation 2 ein auf einer Rotationsvorrichtung 3 aufgelegter geschnittener Rohrabschnitt 4 vorgesehen, auf den ein erster Laserstrahl 6 zu seiner Profilbestimmung gerichtet ist.

Die Messstation 2 weist drei von ihrem Gehäuse abgehende Stifte 7 zur Befestigung am Auswurf für die geschnittenen Rohrabschnitte 4 einer (nicht eingezeichneten) Rohrschneidemaschine auf. Der abgeschrägten Ecke des Gehäuses 1 benachbart ist im Gehäuse 1 ein erster Lasersensor 8 schwenkbar angeordnet. Der angeschaltete Lasersensor 8 gibt den ersten Laserstrahl 6 durch einen Schlitz 9 aus dem Inneren des Gehäuses 1 nach außen in Richtung eines der beiden Rohrenden des Rohrabschnitts 4 ab. Der Schlitz 9 verläuft entlang der abgeschrägten Eckwandung von einer Stirnseite zu einer Längsseite des Gehäuses 1, in Fig.1 liegt der Schlitz 9 in der Zeichenebene. Der Schlitz 9 ist dabei so dimensioniert und angeordnet, dass er sowohl den ausgehenden ersten Laserstrahl 6 herauslässt, als auch den von dem Ende des eingespannten Rohres diffus reflektierten ersten Laserstrahl 6 in das Innere des Gehäuses 1 hinein lässt. Die Richtung des diffus reflektierten Lichtes ist durch gerichtete Pfeile in Fig. 1 dargestellt. Der erste Lasersensor 8 weist neben einem in ihm integrierten Laser 11 eine CCD-Kamera 12 für den diffus reflektierten ersten Laserstrahl 6 als Sensor auf. Die Position des ersten Lasersensors 8 ist derart bestimmt, dass die Schwenkbewegung ein Überstreichen der ganzen Rohbreite ermöglicht und auch diffus reflektierte extremale Laserstrahlen 6e noch im Öffnungsfenster der CCD-Kamera 12 liegen.

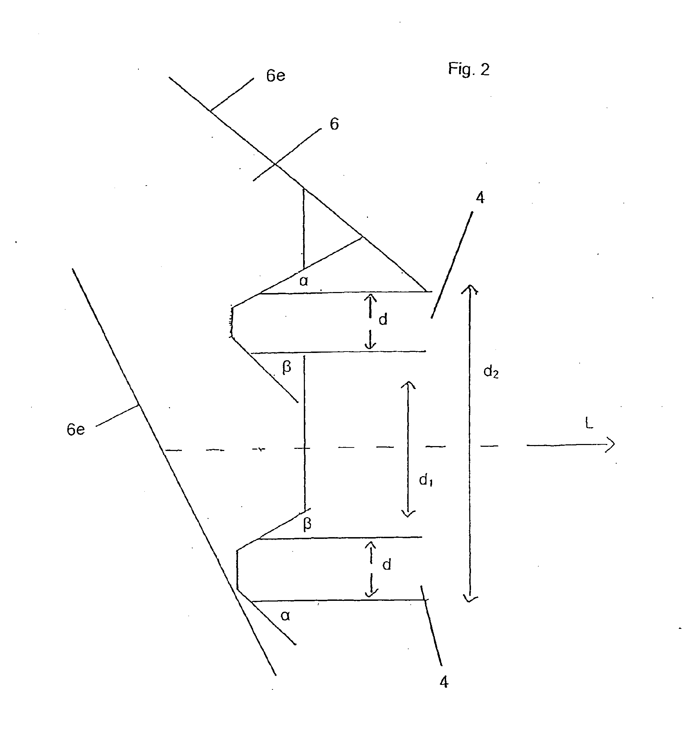

Der erste Lasersensor 1 ist in einer mit einem Servomotor 13 fest verbundenen Halterung 14 montiert. Der Servomotor 13 ist, in Fig. 1, in der (nicht eingezeichneten) Rohrschneidemaschine zugewandten unteren Hälfte etwa mittig angeordnet. Der Servomotor 13 rotiert die Halterung 14 um eine mittig durch ihn hindurch geführte Querachse 16, die in Fig. 1 senkrecht zur Zeichenebene verläuft. Aufgrund der Rotation des Servomotors 13 ist der erste Lasersensor 8 in Längsrichtung des Schlitzes 9 verschwenkbar. Durch die Schwenkbewegung tastet der erste Laserstrahl 6 das Ende des Rohrabschnitts 4 ab, wie in der Beschreibung zu Fig. 2 genauer erläutert wird. Als erster Lasersensor 8 wird hier der Lasersensor LK-G 152 der Firma Keyence verwendet. Der erste Lasersensor 8 weist eine Messfrequenz von 50 kHz auf. D. h. er nimmt pro Sekunde 50.000 Entfernungsmessungen vor während der erste Lasersensor 8 durch den Servomotor 13 kontinuierlich geschwenkt wird. Der Servomotor 13 gestattet eine oszillierende Schwenkbewegung mit einer Frequenz von 6 Hz, somit durchschwenkt der erste Laserstrahl 6 den Spalt zwölf Mal pro Sekunde und vermisst zwölf Schnittlinien in Längsrichtung L der Rohrabschnitts 4.

Zur Bestimmung des Profils des Rohrendes des Rohrabschnitts 4 ist neben der Kenntnis von der Entfernung einzelner Messpunkte des Rohrendes zum ersten Lasersensor 8 auch die Kenntnis der genauen Winkelstellung des ersten Lasersensors 8 um die Querachse 16 erforderlich. Zur Bestimmung der Winkelstellung des ersten Lasersensors ist ein zweiter Lasersensor 19, in Fig. 1, in der oberen Hälfte des Gehäuses 1 positionsfest im Gehäuse 1 angeordnet. Der erste und der zweite Lasersensor 8, 19 sind baugleich.

Der zweite Lasersensor 19 ist auf eine Winkelmessplatte 21 gerichtet, die von der Halterung 14 senkrecht zum ersten Laserstrahl 6 in den Lauf des zweiten Laserstrahls 22 hinein absteht. Die Winkelmessplatte 21 ist einteilig mit der Halterung 14 ausgebildet. Die Winkelmessplatte 21 oszilliert mit der Halterung 14 und dem ersten Lasersensor 8 um die Querachse 16. Durch die Oszillation verringert und vergrößert sich der Abstand der Winkelmessplatte 21 zum zweiten Lasersensor 19 hin periodisch. Durch die Entfernungsmessung zwischen der Winkelmessplatte 21 und dem zweiten Lasersensor 19, ist die Winkelstellung des ersten Lasersensors 8 um die Querachse 16 durch eine Recheneinheit 18 berechenbar.

Der zweite Lasersensor 19 weist gleichfalls eine Taktung von 50 KHz auf, er ermöglicht somit auch 50.000 Messungen pro Sekunde.

Die Taktung des ersten Lasersensors 8 und die Taktung des zweiten Lasersensors 19 sind gleich. Die Entfernungsmesssignale der beiden Lasersensoren 8, 19 werden einer Synchronisationseinheit 17 zugeführt und dort synchronisiert, d. h. zum gleichen Zeitpunkt gemessene Entfernungsmesswerte des ersten Lasersensor 8 und des zweiten Lasersensors 19 werden dort einander zugeordnet. Die einander zugeordneten Messsignalpaare werden dann der Recheneinheit 18 zugeführt, in der aus der großen Menge an Messsignalpaaren, das Profil des Rohrabschnittendes berechnet wird.

Der Rohrabschnitt 4 ist mittels der Rotationsvorrichtung 3 um seine Längsachse L rotierbar. Vorzugsweise wird der Rohrabschnitt 4 innerhalb einer Sekunde einmal um seine Längsachse L rotiert. Die Vermessung des Rohrabschnitts 4 dauert insgesamt ebenfalls eine Sekunde. Das Rohrende wird nach einer vollen Umdrehung ausgeworfen und ein nächstes Rohrende wird in der Rotationsvorrichtung 3 aufgenommen und vermessen.

Fig. 2 zeigt das Rohrende des Rohres in Fig. 1 in einer Schnittansicht, sowie die zwei eingezeichneten, extremalen Laserstrahlen 6e des ersten Lasersensors 8. Der erste Laserstrahl 6 mit seiner Messfrequenz von 50 kHz oszilliert zwischen den beiden extremalen Laserstrahlen 6e mit einer Frequenz von 6 Hz, und er überstreicht dabei das Ende des Rohrabschnitts 4 zwölf Mal pro Sekunde. Während einer vollen Schwingung, d.h. zwei Überstreichungen der Rohrendes, können damit etwa 8.300 Messwerte ermittelt werden. In dem in Fig. 2 dargestellten überstrichenen Schnitt, können die beiden äußeren Fasenwinkel α und die beiden inneren Fasenwinkel β, der Innendurchmesser d₁, der Außendurchmesser d₂, sowie die Breite b der Stirnfläche durch die Messungen berechnet werden. Der im Wesentlichen rotationssymmetrisch entlang seiner Längsachse L ausgebildete Rohrabschnitt 4 rotiert pro Sekunde einmal um seine Längsachse L. das Rohrende kann in seiner dreidimensionalen Ausgestaltung durch Mittlung und Interpolation der zwölf pro Sekunde gemessenen Schnittflächen berechnet werden.

### Bezugszeichenliste

- 1: Gehäuse
- 2: Messstation
- 3: Halterung, Rotationsvorrichtung
- 4: Rohrabschnitt
- 5: -
- 6: erster Laserstrahl
- 6e: extremaler Laserstrahl
- 7: Stift
- 8: erster Lasersensor
- 9: Schlitz
- 10: -
- 11: Laser
- 12: CCD-Kamera
- 13: Servomotor
- 14: Halterung
- 15: -
- 16: Querachse
- 17: Synchronisationseinheit
- 18: Recheneinheit
- 19: zweiter Lasersensor
- 20: -
- 21: Winkelmessplatte
- 22: zweiter Laserstrahl
- α: äußerer Fasenwinkel
- β: innerer Fasenwinkel
- d1: Innendurchmesser
- d2: Außendurchmesser
- b: Breite der Stirnfläche
- L: Längsrichtung des Rohrabschnitts

## Patentansprüche

1. Messstation, insbesondere für eine Schneidemaschine (2) für stangenförmiges Profilmaterial, mit einem mittels eines Antriebs (13) um eine Querachse (16) schwenkbaren ersten Entfernungssensor (8) zur Erzeugung eines ersten Abtaststrahls (6), **dadurch gekennzeichnet, dass** der erste Entfernungssensor während der kontinuierlichen Schwenkbewegung ein Objekt (4) abtastet und getaktet erste Entfernungsmesswerte misst und
einem bezüglich der Querachse (16) ortsfesten zweiten Entfernungssensor (19) zur Erzeugung eines zweiten Abtaststrahls (22), der auf eine drehfest mit dem ersten Entfernungssensor (8) verbundene Winkelmesseinrichtung (21) gerichtet ist und getaktet zweite Entfernungsmesswerte misst und
einer Anschlüsse für die ersten und zweiten Entfernungsmesssignale aufweisenden elektronischen Synchronisationseinheit (17), und
einer ein Profil des Objekts (4) aus den synchronisierten Entfernungsmesssignalen berechnenden Recheneinheit (18).

2. Messstation nach Anspruch 1,
**dadurch gekennzeichnet, dass** der erste und/oder zweite Entfernungssensor (8, 19) jeweils einen Laser (11) aufweisen.

3. Messstation nach Anspruch 1 oder 2,
**gekennzeichnet durch** einen am ersten Entfernungssensor (8) angeordneten, eine kontinuierliche Schwenkbewegung um die Querachse (16) erzeugenden Servomotor (13).

4. Messstation nach Anspruch 1, 2 oder 3,
**dadurch gekennzeichnet, dass** die erste Taktung und die zweite Taktung eine gleiche Frequenz haben.

5. Messstation nach Anspruch 4,
**dadurch gekennzeichnet, dass** die Frequenz etwa 50kHz beträgt.

6. Messstation nach Anspruch 3,
**dadurch gekennzeichnet, dass** der Servomotor (13) eine Schwenkfrequenz von etwa 6 Hz erzeugt.

7. Messstation nach Anspruch 1,
**gekennzeichnet durch** eine Rotationsvorrichtung (3) für das zu vermessende Objekt mit einer Rotationsfrequenz von vorzugsweise etwa 1 Hz.

8. Messstation nach Anspruch 1,
**dadurch gekennzeichnet, dass** die Winkelmesseinrichtung eine den zweiten Abtaststrahl (22) reflektierenden Winkelmessplatte (21) aufweist.

9. Verfahren zur Bestimmung des Profils eines Objekts (4), indem mittels eines Antriebs (13) ein erster Entfernungssensor (8) mit einem ersten Abtaststrahl (6) um eine Querachse (16) kontinuierlich geschwenkt wird und
während der kontinuierlichen Schwenkbewegung das Objekt (4) abgetastet wird und erste Entfernungsmesswerte getaktet gemessen werden und
ein zweiter Abtaststrahl (22) eines bezüglich der Querachse (16) ortsfesten zweiten Entfernungssensors (19) auf eine drehfest mit dem ersten Entfernungssensor(8) verbundene Winkelmesseinrichtung (21) gerichtet wird und
zweite Entfernungsmesswerte des ersten Entfernungssensors (8) getaktet gemessen werden und
erste und zweite Entfernungsmesssignale einer elektronischen Synchronisationseinheit (17) zugeführt werden und dort synchronisiert werden und ein Profil des Objekts (4) aus den synchronisierten Entfernungsmesssignalen mittels einer Recheneinheit (18) berechnet wird.

10. Verfahren nach Anspruch 9;
**dadurch gekennzeichnet, dass** erste und zweite Lasersensoren (8, 19) verwendet werden.

11. Verfahren nach Anspruch 9 oder 10,
**dadurch gekennzeichnet, dass** ein im Wesentlichen um eine Längsachse (L) rotationssymmetrisches Objekt (4) vermessen wird und während der Schwenkbewegung des ersten Entfernungssensors (8) das Objekt (4) um die Längsachse (L) rotiert wird und dabei Schnitte des Objektes (4) abgetastet werden.

12. Verfahren nach Anspruch 11,
**dadurch gekennzeichnet, dass** aus den gemessenen Schnitten ein dreidimensionales und/oder zweidimensionales Durchschnittsprofil des Objektes (4) berechnet wird.

13. Verfahren nach Anspruch 9,
**dadurch gekennzeichnet, dass** der erste Abtaststrahl (6) mit einer Frequenz von etwa 6 Hz um die Querachse (16) oszilliert und dabei mit einer ersten Taktung von etwa 50 kHz erste Entfernungsmesswerte gemessen werden und mit einer zweiten Taktung von etwa 50 kHz zweite Entfernungsmesswerte gemessen werden und das Objekt (4) mit etwa 1 Hz rotiert wird.

14. Maschine zum Ablängen von stangenförmigem Profilmaterial mit einem Auswurf für abgelängte Profilmaterialabschnitte (4) und eine Rotationsvorrichtung (3) für die abgelängten Profilmaterialabschnitte (4) und wenigstens einer Messstation (2) nach wenigstens einem der Ansprüche 1 bis 8, die neben der Rotationsvorrichtung (3) angeordnet ist und der erste Abtaststrahl (6) auf ein Profilmaterialende eines in der Rotationsvorrichtung (3) aufnehmbaren Profilmaterialabschnitts (4) richtbar ist.

## Claims

1. A measuring station, in particular for a cutting machine (2) for rod-shaped profiled material, with a first distance sensor (8), pivotable by means of a drive (13) about a transverse axle (16), for generating a first scanning beam (6), **characterised in that** the first distance sensor during the continuous pivoting movement scans an object (4) and measures first measured distance values in a pulsed manner, and
a second distance sensor (19) which is fixed relative to the transverse axle (16) for generating a second scanning beam (22) which is directed at an angle measuring means (21) connected in a manner resistant to rotation with the first distance sensor (8) and
measures second measured distance values in a pulsed manner, and
an electronic synchronization unit (17) having connections for the first and second distance measurement signals, and
a calculating unit (18) which calculates a profile of the object (4) from the synchronized distance measurement signals.

2. A measuring station according to Claim 1, **characterised in that** the first and/or second distance sensor (8, 19) has/have in each case a laser (11).

3. A measuring station according to Claim 1 or 2, **characterised by** a servomotor (13) arranged on the first distance sensor (8) which generates a continuous pivoting movement about the transverse axle (16).

4. A measuring station according to Claim 1, 2 or 3, **characterised in that** the first pulse rate and the second pulse rate have the same frequency.

5. A measuring station according to Claim 4, **characterised in that** the frequency is approximately 50 kHz.

6. A measuring station according to Claim 3, **characterised in that** the servomotor (13) has a pivoting frequency of approximately 6 Hz.

7. A measuring station according to Claim 1, **characterised by** a rotation device (3) for the object to be measured, having a rotational frequency of preferably about 1 Hz.

8. A measuring station according to Claim 1, **characterised in that** the angle measuring means has an angle measuring plate (21) which reflects the second scanning beam (22).

9. A method for determining the profile of an object (4), in which a first distance sensor (8) with a first scanning beam (6) is pivoted continuously by means of a drive (13) about a transverse axle (16), and
during the continuous pivoting movement the object (4) is scanned and first measured distance values are measured in a pulsed manner, and
a second scanning beam (22) of a second distance sensor (19) which is fixed relative to the transverse axle (16) is directed at an angle measuring means (21) connected in a manner resistant to rotation with the first distance sensor (8), and
second measured distance values of the first distance sensor (8) are measured in a pulsed manner, and
first and second distance measurement signals are supplied to an electronic synchronisation unit (17) and are synchronized therein, and
a profile of the object (4) is calculated from the synchronised distance measurement signals by means of a calculating unit (18).

10. A method according to Claim 9, **characterised in that** first and second laser sensors (8, 19) are used.

11. A method according to Claim 9 or 10, **characterised in that** an object (4) which is substantially rotationally symmetrical about a longitudinal axis (L) is measured and during the pivoting movement of the first distance sensor (8) the object (4) is rotated about the longitudinal axis (L) and in so doing sections of the object (4) are scanned.

12. A method according to Claim 11, **characterised in that** a three-dimensional and/or two-dimensional cross-sectional profile of the object (4) is calculated from the measured sections.

13. A method according to Claim 9, **characterised in that** the first scanning beam (6) oscillates about the transverse axle (16) at a frequency of approximately 6 Hz and in so doing first measured distance values are measured with a first pulse rate of approximately 50 kHz and second measured distance values are measured with a second pulse rate of approximately 50 kHz and the object (4) is rotated at about 1 Hz.

14. A machine for cutting to length rod-shaped profiled material, with an ejector for cut-to-length profiled material sections (4) and a rotation device (3) for the cut-to-length profiled material sections (4) and at least one measuring station (2) according to at least one of Claims 1 to 8, which is arranged next to the rotation device (3) and the first scanning beam (6) can be directed at a profiled-material end of a profiled material section (4) which can be received in the rotation device (3).

## Revendications

1. Poste de mesure, en particulier pour une machine de coupe (2) de matériaux profilés en forme de barres, comprenant un premier capteur de distance (8) pouvant être pivoté autour d'un axe transversal (15), à l'aide d'un moyen d'entraînement (13), et destiné à générer un premier faisceau de balayage (6), **caractérisé par le fait que**, pendant le mouvement pivotant continu, le premier capteur de distance balaie un objet (4) et mesure de façon cyclique des premières valeurs de mesure de distance, le poste comprenant un deuxième capteur de distance (19) qui est fixe par rapport à l'axe transversal (16) et destiné à produire un deuxième faisceau de balayage (22), lequel est dirigé sur un dispositif de mesure d'angle (21), lié de manière solidaire en rotation au premier capteur de distance (8), et mesure de façon cyclique des deuxièmes valeurs de mesure de distance, et une unité de synchronisation (17) électronique présentant des connexions pour les premiers et deuxièmes signaux de mesure de distance, et une unité de calcul (18) déterminant un profil de l'objet (4) à partir des signaux de mesure de distance synchronisés.

2. Poste de mesure selon la revendication 1, **caractérisé par le fait que** le premier et/ou le deuxième capteur de distance (8, 19) présentent chacun un laser (11).

3. Poste de mesure selon la revendication 1 ou 2, **caractérisé par le fait qu'**il comprend un servomoteur (13) disposé sur le premier capteur de distance (8) et générant un mouvement pivotant continu autour de l'axe transversal (16).

4. Poste de mesure selon la revendication 1, 2 ou 3, **caractérisé par le fait que** le premier cycle et le deuxième cycle ont la même fréquence.

5. Poste de mesure selon la revendication 4, **caractérisé par le fait que** la fréquence est d'environ 50 kHz.

6. Poste de mesure selon la revendication 3, **caractérisé par le fait que** le servomoteur (13) génère une fréquence de pivotement d'environ 6 Hz.

7. Poste de mesure selon la revendication 1, **caractérisé par le fait qu'**il comprend un dispositif de rotation (3) pour l'objet à mesurer, avec une fréquence de rotation qui est de préférence d'environ 1 Hz.

8. Poste de mesure selon la revendication 1, **caractérisé par le fait que** le dispositif de mesure d'angle présente une plaque de mesure d'angle (21) réfléchissant le deuxième faisceau de balayage (22).

9. Procédé pour déterminer le profil d'un objet (4) par le fait qu'un premier capteur de distance (8), avec un premier faisceau de balayage (6), est pivoté de manière continue autour d'un axe transversal (16), à l'aide d'un moyen d'entraînement (13), et que, pendant le mouvement pivotant continu, l'objet (4) est balayé et des premières valeurs de mesure de distance sont mesurées, et qu'un deuxième faisceau de balayage (22) d'un deuxième capteur de distance (19), qui est fixe par rapport à l'axe transversal (16), est dirigé sur un dispositif de mesure d'angle (21) lié de manière solidaire en rotation au premier capteur de distance (8), et que des deuxièmes valeurs de mesure de distance du premier capteur de distance (8) sont mesurées de façon cyclique et des premiers et deuxièmes signaux de mesure de distance sont transmis à une unité de synchronisation (17) électronique qui les synchronise, et qu'un profil de l'objet (4) est déterminé à partir des signaux de mesure de distance synchronisés, à l'aide d'une unité de calcul (18).

10. Procédé selon la revendication 9, **caractérisé par le fait que** l'on utilise des premiers et deuxièmes capteurs laser (8, 19).

11. Procédé selon la revendication 9 ou 10, **caractérisé par le fait que** l'on mesure un objet (4) qui est sensiblement symétrique de révolution autour d'un axe longitudinal (L) et que, pendant le mouvement pivotant du premier capteur de distance (8), l'objet (4) est tourné autour de l'axe longitudinal (L), avec balayage de coupes de l'objet (4).

12. Procédé selon la revendication 11, **caractérisé par le fait qu'**un profil moyen en trois et/ou en deux dimensions de l'objet (4) est calculé à partir des coupes mesurées.

13. Procédé selon la revendication 9, **caractérisé par le fait que** le premier faisceau de balayage (6) oscille avec une fréquence d'environ 6 Hz autour de l'axe transversal (16) et que l'on mesure ainsi des premières valeurs de mesure de distance, avec un premier cycle d'environ 50 kHz, et des deuxièmes valeurs de mesure de distance, avec un cycle d'environ 50 kHz, et que l'objet (4) est mis en rotation avec environ 1 Hz.

14. Machine de découpe à la longueur de matériaux profilés en forme de barres, comprenant une sortie pour des tronçons de matériau profilé (4) découpés à la longueur et un dispositif de rotation (3) pour les tronçons de matériau profilé (4) découpés à la longueur et au moins un poste de mesure (2) selon au moins une des revendications 1 à 8, qui est disposé à côté du dispositif de rotation (3) et dont le premier faisceau de balayage (6) peut être dirigé sur une extrémité de matériau profilé d'un tronçon de matériau profilé (4) pouvant être reçu par le dispositif de rotation (3).
